# FASCICULE DE BREVET EUROPEEN

(11) **EP 1 588 008 B1**
(45) Date de publication et mention de la délivrance du brevet: **27.04.2016**
(21) Numéro de dépôt: 04701974.0
(22) Date de dépôt: 14.01.2004
(51) Int. Cl.: B32B 17/10, E06B 3/54

(54) **Système d'assemblage**
Montage ermöglichendes System
System for assembly

(30) Priorité: 15.01.2003 FR 0300379
(43) Date de publication de la demande: 26.10.2005
(73) Titulaire: SAINT-GOBAIN GLASS FRANCE, 92400 Courbevoie (FR)
(72) Inventeur: ERNEWEIN, Jacques, F-94440 Villecresnes (FR); TISSOT, Philippe, F-74700 Sallanches (FR)
(74) Mandataire: Jamet, Vincent
(86) Numéro de dépôt international: PCT/FR2004/000053
(87) Numéro de publication internationale: WO 2004/072423

(56) Documents cités:
- EP-A- 0 801 201
- EP-A- 1 170 514
- EP-A- 1 179 684

## Description

La présente invention est relative à un système d'assemblage entre au moins une feuille de verre, en particulier une feuille de verre ayant subi un traitement de renforcement superficiel notamment thermique ou chimique, comportant au moins un trou fraisé et, soit une autre feuille de verre de même type, soit un élément de structure notamment métallique, ainsi qu'à une feuille de verre équipée d'un tel système et à l'application d'une telle feuille à la réalisation d'un ensemble préfabriqué.

Dans le document EP-A-0 655 543, la demanderesse a décrit un système d'assemblage entre un élément vitré comportant un trou fraisé et une structure porteuse, ce système comportant une pièce de liaison entre deux parties dont l'une, tronconique épouse la surface conique du trou fraisé et dont l'autre, formant partie de réaction, s'appuie sur la surface de la feuille opposée au fraisage du trou. Une liaison par vissage entre ces deux parties permet de serrer la pièce de liaison dans le trou.

Ce système d'assemblage est bien adapté pour la solidarisation d'un élément vitré monolithique à une structure porteuse. Néanmoins, lorsque l'élément vitré monolithique est trempé, le montage n'est pas pérenne en cas de choc accidentel, il y a risque de fragmentation de l'élément vitré.

Dans le document EP-A-0 801 201, la demanderesse a décrit un système d'assemblage de deux plaques de verre trempé. Les deux plaques présentent des trous fraisés de direction opposée, dans lesquels est engagée une pièce de liaison qui assure la solidarisation de l'ensemble après serrage.

Ce système d'assemblage est particulièrement bien adapté lorsque l'on veut solidariser des éléments vitrés de masse importante. Néanmoins, compte tenu du montage entre la pièce de liaison et les éléments vitrés (celle-ci n'est fixée à aucun des éléments vitrés), il demeure un risque de destruction de l'ensemble du montage en cas de bris de l'un seulement des éléments vitrés. De plus, la charge admissible est limitée.

La présente invention a pour but d'apporter une solution à ce problème de sécurité de l'assemblage en cas de bris d'un des éléments vitrés.

Pour obtenir ce résultat, l'invention fournit un système d'assemblage entre une feuille de verre comportant un trou fraisé sur chacun de ses côtés et une autre feuille de verre comportant également un trou fraisé sur chacun de ses côtés, chaque trou fraisé étant adapté pour recevoir respectivement des première et seconde pièces de liaison en deux éléments permettant par serrage desdits éléments d'induire au niveau du trou fraisé une précontrainte, chacune des première et seconde pièces de liaison étant pourvue d'un alésage, le système comportant un noyau de liaison avec les première et seconde pièces de liaison, la particularité de ce système étant que le noyau comporte des première et seconde parties dont la première partie épouse la surface de l'alésage de la première pièce de liaison sur laquelle s'exerce une force sensiblement parallèle à l'axe du trou et dont la seconde partie du noyau de liaison s'engage dans l'alésage pratiqué dans la seconde pièce de liaison pour y supporter la réaction à ladite force.

Le système de l'invention permet lors du serrage des deux parties formant le noyau d'établir un montage sans jeu au sein du système d'assemblage.

De préférence, l'alésage de la première pièce de liaison est conique et il est adapté pour recevoir la première partie du noyau de liaison.

Par ailleurs, la surface conique de la première partie du noyau de liaison possède un angle d'ouverture sensiblement voisin de celui du cône de l'alésage de la première pièce de liaison.

De cette façon, le contact entre l'alésage de la première partie du noyau de liaison et la partie conique de la première pièce de liaison est situé au plus près possible de la surface droite de la feuille de verre assemblée sur la première pièce de liaison, ce qui est favorable à un montage affleurant du système d'assemblage.

De préférence, l'alésage de la seconde pièce de liaison est sensiblement cylindrique et il est adapté pour recevoir la seconde partie du noyau de liaison.

De préférence, la seconde partie du noyau de liaison comporte au moins une première et une deuxième bagues excentrées emboîtées l'une dans l'autre.

De préférence encore, chacune des première et deuxième bagues est fendue.

De préférence, l'alésage intérieur de la première bague est conique.

Avantageusement, l'alésage extérieur de la première bague comporte un épaulement adapté pour venir en appui adapté pour venir se loger dans un alésage permettant ainsi le maintien de l'un des substrats en cas de bris de l'autre substrat.

De cette façon, lorsque les première et seconde parties du noyau de liaison sont respectivement assemblées avec les première et seconde pièces de liaison, il demeure un espace libre entre les faces en regard des première et seconde pièces de liaison, cet espace libre correspond à l'épaisseur d'un film en matière thermoplastique interposé entre les deux feuilles de verre assemblées par le système d'assemblage.

L'invention vise également au moins une feuille de verre d'une épaisseur d'au moins 6 mm, présentant au moins un trou doublement fraisé avec une partie conique débouchant de part et d'autre sur chacune des faces de la feuille de verre et une partie médiane cylindrique qui possède sensiblement le même axe que les parties coniques, et qui a pour particularités qu'elle comporte à l'intérieur de chaque trou fraisé une pièce de liaison, les pièces de liaison étant adaptées pour s'assembler entre-elles de manière à permettre un montage avec le système d'assemblage précédemment décrit.

En outre, la ou les pièces coniques possèdent un angle d'ouverture du cône supérieur à celui du cône du trou fraisé correspondant.

De façon avantageuse la ou les pièces de liaison et éventuellement le noyau de liaison sont équipées de moyens de préhension tels que trous, bossages, etc. pour transmettre des efforts dirigés sensiblement dans le plan des feuilles de verre soit à un élément de structure, soit à une autre feuille de verre.

Une application intéressante de telles feuilles consiste dans la réalisation d'ensembles formés d'éléments préfabriqués assemblés sur chantier.

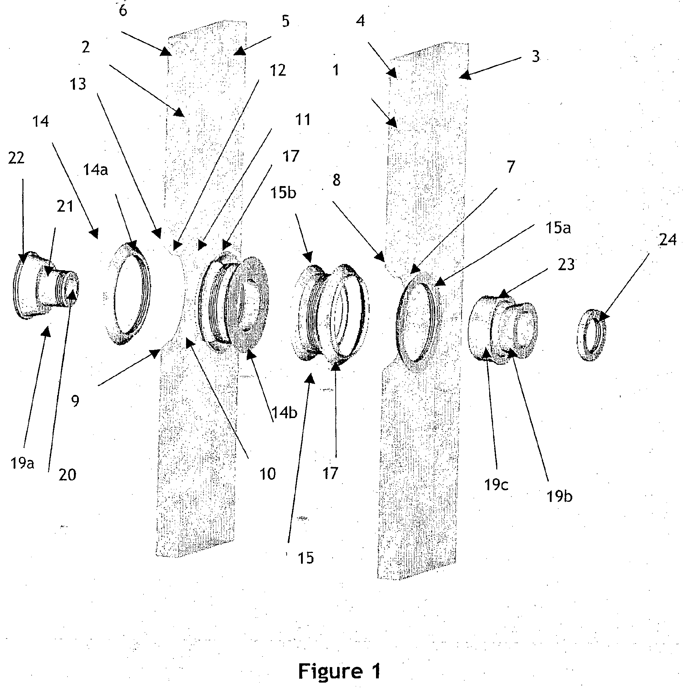

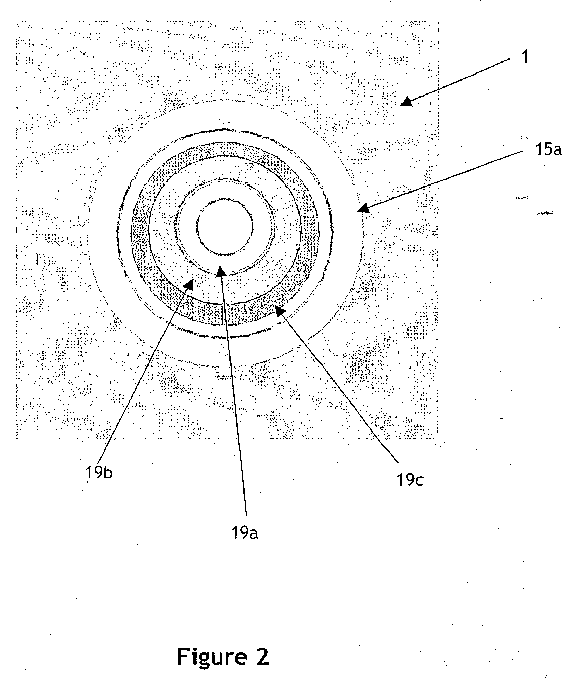

La présente invention va maintenant être exposée de façon plus détaillée à l'aide d'exemples pratiques illustrés avec les dessins qui sont des coupes transversales de systèmes conformes à l'invention et qui représentent respectivement :
- **la** **figure 1** est une vue en coupe en élévation d'un système d'assemblage entre deux plaques en verre, notamment en verre trempé
- **la** **figure 2** est une vue de face des bagues appartenant au noyau de liaison.

La figure 1 montre un système d'assemblage entre deux plaques 1, 2 de verre. Ces plaques de verre peuvent être trempées, durcies, ou recuites.

Chaque plaque 1, 2 est percée sur chacune de ses faces 3, 4, 5, 6 d'un trou 7, 8, 9, 10 fraisé qui comporte une partie conique 11, 12 de direction opposée. Les parties coniques 11, 12 de direction opposée d'une même plaque de verre sont séparées par une partie médiane cylindrique 13 coaxiale auxdites parties coniques 11, 12.

Les plaques ou feuilles de verre 1, 2 ainsi percées sont adaptées pour recevoir respectivement des première et seconde pièces de liaison 14, 15 réalisées en matériau métallique.

Chacune des première et seconde pièces de liaison 14, 15 est constituée de deux éléments 14a, 14b, 15a, 15b, adaptés pour coopérer entre-eux par serrage au niveau des trous fraisés réalisés dans les feuilles de verre.

Ainsi, la première pièce de liaison 14 comprend un premier élément 14a, qui présente une surface conique qui vient épouser la forme de l'une des parties coniques 11, 12 du trou et une partie cylindrique, qui pénètre dans la partie cylindrique 13 du trou, sans atteindre la face opposée. Cette partie cylindrique est de diamètre inférieur à celui de la partie cylindrique du trou. L'élément 14a est traversé par un alésage conique 16 dont la fonction sera explicitée plus loin dans le texte.

La première pièce de liaison 14 comporte également un second élément 14b qui présente une surface conique qui vient épouser la forme de l'autre des parties coniques 11, 12 du trou (en fait, celle qui est de direction opposée) et un alésage pourvu d'un taraudage adapté pour venir se visser sur une partie filetée réalisée sur la partie cylindrique du premier élément 14a.

En vissant le second élément 14b sur le premier élément 14a en faisant coopérer les surfaces coniques respectives au niveau des parties coniques 11, 12 du trou, on réalise un assemblage sans jeu qui sera apte à supporter les efforts venus de la feuille de verre 1 ou 2. Afin d'améliorer le contact entre les portées coniques des premier et second éléments 14a et 14b et les parties coniques 11, 12 du trou, on prévoit que les angles au sommet des cônes diffèrent avantageusement de 0,5° à 5°.

Afin encore d'améliorer la qualité de l'assemblage entre les deux éléments 14a, 14b de la première pièce de liaison 14, on pourra interposer entre les surfaces coniques des premier et second éléments 14a, 14b et les parties coniques 11, 12 des trous, une bague 17 réalisée dans une matière ductile (aluminium par exemple).

De même, la seconde pièce de liaison 15 comprend un premier élément 15a, qui présente une surface conique qui vient épouser la forme de l'une des parties coniques 11, 12 du trou et une partie cylindrique, qui pénètre dans la partie cylindrique 13 du trou, sans atteindre la face opposée. Cette partie cylindrique est de diamètre inférieur à celui de la partie cylindrique 13 du trou. L'élément 15a est traversé par un alésage 18 sensiblement cylindrique dont la fonction sera explicitée plus loin dans le texte.

La seconde pièce de liaison 15 comporte également un second élément 15b qui présente une surface conique qui vient épouser la forme de l'autre des parties coniques 11, 12 du trou (en fait, celle qui est de direction opposée) et un alésage pourvu d'un taraudage adapté pour venir se visser sur une partie filetée réalisée sur la partie cylindrique du premier élément 15a.

En vissant le second élément 15b sur le premier élément 15a en faisant coopérer les surfaces coniques respectives au niveau des parties coniques 11, 12 du trou, on réalise un assemblage sans jeu qui sera apte à supporter les efforts venus de la feuille de verre 1 ou 2. Afin d'améliorer le contact entre les portées coniques des premier et second éléments 15a et 15b et les parties coniques 11, 12 du trou, on prévoit que les angles au sommet des cônes diffèrent avantageusement de 0,5° à 5°.

De manière similaire à la première pièce de liaison 14 et afin d'améliorer la qualité de l'assemblage entre les deux éléments 15a, 15b de la seconde pièce de liaison 15, on pourra interposer entre les surfaces coniques des premier et second éléments 15a, 15b de la seconde pièce de liaison 15 et les parties coniques 11, 12 des trous, une bague 17' réalisée dans une matière ductile (aluminium par exemple).

L'assemblage des première et seconde pièces de liaison 14, 15 pratiqué sur les feuilles de verre respective est réalisé de manière affleurante.

On revient maintenant sur un autre élément du système d'assemblage qui est destiné à coopérer au niveau des première et seconde pièces de liaison 14, 15, à savoir le noyau de liaison 19.

Le noyau de liaison 19 comporte une première pièce 19a pourvu d'un alésage central 20 destiné à recevoir des moyens de préhension (non représentés sur les figures) adaptés pour solidariser le noyau de liaison 19 et toutes les parties qui lui sont solidaires à une autre pièce analogue ou à une structure extérieure porteuse.

Cette première pièce 19a comporte une première zone sensiblement cylindrique 21 formant un épaulement et une seconde zone 22 à portée conique.

Globalement les dimensions cumulées en épaisseur des première et seconde zones 21, 22 de la première pièce 19a correspondent sensiblement à l'épaisseur des deux feuilles de verre 1, 2. On remarque que la zone conique 22 est sensiblement limitée au niveau de la première pièce de liaison 14, tandis que la zone cylindrique 21 (l'épaulement) est sensiblement limitée au niveau de la seconde pièce de liaison 15.

La seconde zone 22 à portée conique est adaptée pour venir au contact de l'alésage également à portée conique réalisé au niveau du premier élément 14a de la première pièce de liaison 14.

La seconde zone 22 de portée conique de cette première pièce 19a possède un angle d'ouverture du cône sensiblement voisin de celui du cône de l'alésage de la première pièce de liaison 14.

La première zone 21 à portée cylindrique de la première pièce 19a du noyau de liaison 19 coopère avec les autres éléments 19b, 19c conformant le noyau de liaison 19 et l'extrémité libre de la première zone 21 est pourvue d'un filetage.

Dans le mode de réalisation représenté en figure 1, les autres éléments 19b, 19c du noyau de liaison 19 sont constitués par au moins deux bagues s'emboîtant l'une dans l'autre.

On s'attachera maintenant à décrire chacune des bagues.
Chacune de ces bagues est réalisée dans un matériau métallique. Elles sont fendues et elles sont excentrées (comme cela est visible sur la figure 2).

La bague « dite intérieure » comporte un alésage à paroi sensiblement cylindrique qui s'emboîte avec un jeu minimum au niveau de l'épaulement 21 de la première pièce 19a constituant le noyau de liaison 19 et une paroi externe à portée conique adaptée pour coopérer également avec un jeu minimal avec un alésage réalisé dans la bague « dite extérieure » 19c.

Cette bague «dite extérieure» 19c coopère par emboîtement au niveau de l'alésage à portée sensiblement cylindrique pratiqué au niveau du second élément 15b de la seconde pièce de liaison 15.

On remarque que l'alésage extérieur de la bague « dite extérieure » 19c comporte un épaulement 23 adapté pour venir se loger dans un alésage permettant ainsi le maintien du verre 1 en cas de bris du verre 2.

La chaîne de côtes de l'empilement des éléments formant le noyau de liaison 19 est calculée de telle manière que lorsque l'élément 19a est emboîté au sein de la première pièce de liaison 14 et que les bagues 19b, et 19c solidaires de la seconde pièce de liaison 15 coopèrent au niveau de la partie cylindrique de 19a, il demeure un espace libre entre les faces en regard des deux éléments vitrés 1, 2.

Cet espace libre est destiné à être comblé par une feuille de matière thermoplastique en PVB, PU par exemple, cette feuille de matière thermoplastique constituant l'intercalaire de feuilletage entre les deux éléments vitrés 1, 2.

L'avantage de ce montage réside dans le fait que cette intercalaire de feuilletage n'est pas soumis aux efforts de compression lorsque l'on sollicite les éléments vitrés, elle ne peut pas être comprimée lors du montage.

Le serrage du système d'assemblage est assuré par un écrou 24 qui se visse au niveau de l'extrémité filetée de la zone cylindrique 21 de la première pièce 19a du noyau de liaison 19.

Une autre particularité des bagues 19b, 19c constituant avec la pièce 19a le noyau de liaison 19, réside dans le fait que les axes de rotation sont excentrés.

Lors de l'assemblage des deux feuilles de verre 1, 2 et compte tenu des tolérances de fabrication dans le positionnement des trous 7, 8, 9, 10, il peut subsister un défaut d'alignement entre les trous 7, 8 d'une part, et les trous 9, 10 d'autre part, qu'il convient de rattraper.

En faisant tourner l'une par rapport à l'autre les bagues 19b, 19c autour de la partie cylindrique 21 de la pièce 19a, il est possible de rattraper les jeux de montages.

Ce mouvement de rotation entre les bagues 19b, 19c combiné à leur particularité structurelle (elles sont fendues et présentent des portées coniques) garantit à l'utilisateur lors de l'assemblage final, un montage sans jeu et qui apte à supporter des charges très importantes. A titre exemple, pour un assemblage d'un verre feuilleté de 19 mm d'épaisseur pour chacune des parois de verre, une charge de 20 tonnes appliquée en traction n'a pu faire céder l'assemblage.

Par ailleurs, au titre des avantages majeurs de la solution proposée, l'assemblage précédemment décrit permet de répondre à des exigences de sécurité sévères. On remarque que chacune des feuilles de verre est rendue solidaires par leur pièce de liaison respective 14 et 15 au noyau de liaison 19. L'utilisation d'une intercalaire de feuilletage entre les deux feuilles de verre garantit qu'en cas de bris de l'une des feuilles de verre, l'ensemble conserve sa cohésion et demeure solidaire du noyau de liaison, qui est fixé soit à une structure porteuse, soit à un autre élément du même type.

On notera que, pour des considérations esthétiques, les dimensions des pièces et des trous ont été calculées pour que les pièces 19, 14, 15 viennent exactement en affleurement avec les surfaces 3, 6 des plaques de verre 1, 2 après serrage du dispositif.

## Revendications

1. Système d'assemblage adapté pour être mis entre une feuille de verre (1) comportant un trou fraisé (7, 8) sur chacun de ses côtés (3, 4) et une autre feuille de verre (2) comportant également un trou fraisé (9, 10) sur chacun de ses côtés (5, 6), chaque trou fraisé étant adapté pour recevoir respectivement des première et seconde pièces de liaison (14, 15) en deux éléments (14a, 14b, 15a, 15b) du système permettant par serrage desdits éléments d'induire au niveau du trou fraisé une précontrainte, chacune des première et seconde pièces de liaison (14, 15) étant pourvue d'un alésage, le système comportant également un noyau de liaison (19) avec les première et seconde pièces de liaison (14, 15), tel que le noyau (19) comporte des première (19a) et seconde parties (19b, 19c) dont la première partie (19a) épouse la surface de l'alésage de la première pièce de liaison (14) sur laquelle s'exerce une force sensiblement parallèle à l'axe du trou et dont la seconde partie (19b, 19c) du noyau de liaison (19) s'engage dans l'alésage pratiqué dans la seconde pièce de liaison (15) pour y supporter la réaction à ladite force.

2. Système d'assemblage selon la revendication 1, **caractérisé en ce que** l'alésage de la première pièce de liaison (14) est conique et il est adapté pour recevoir la première partie (19a) du noyau de liaison (19).

3. Système d'assemblage selon l'une des revendications 1 ou 2, **caractérisé en ce que** la surface conique (22) de la première partie (19a) du noyau de liaison (19) possède un angle d'ouverture du cône sensiblement voisin de celui du cône de l'alésage de la première pièce de liaison (14).

4. Système d'assemblage selon l'une des revendications précédentes, **caractérisé en ce que** l'alésage de la seconde pièce de liaison (15) est sensiblement cylindrique et il est adapté pour recevoir la seconde partie du noyau de liaison (19).

5. Système d'assemblage selon l'une des revendications précédentes, **caractérisé en ce que** la seconde partie du noyau de liaison comporte au moins une première et une deuxième bague (19b, 19c) excentrées emboîtées l'une dans l'autre.

6. Système d'assemblage selon la revendication 5, **caractérisé en ce que** chacune des première et deuxième bagues (19b, 19c) est fendue.

7. Système d'assemblage selon l'une des revendications 5 ou 6, **caractérisé en ce que** l'alésage intérieur de la première bague (19c) est conique.

8. Système d'assemblage selon l'une des revendications 5 à 7, **caractérisé en ce que** l'alésage extérieur de la première bague (19c) comporte un épaulement (23) adapté pour venir se loger dans un alésage permettant ainsi le maintien du verre (1) en cas de bris du verre (2).

9. Ensemble comprenant une première feuille de verre (1) et une deuxième feuille de verre (2), **caractérisé en ce que** les feuilles de verre (1, 2) sont assemblées au moyen d'un système d'assemblage selon l'une quelconque des revendications précédentes.

10. Ensemble selon la revendication 9, **caractérisé en ce qu**'il y a un espace libre entre les faces en regard des deux feuilles de verre (1, 2), cet espace étant comblé par une feuille de matière thermoplastique constituant un intercalaire de feuilletage entre les deux feuilles de verre (1, 2).

## Patentansprüche

1. Verbindungssystem, das geeignet ist, zwischen eine Glasscheibe (1), die ein gefrästes Loch (7, 8) auf jeder ihrer Seiten (3, 4) umfasst, und eine weitere Glasscheibe (2), die ebenfalls ein gefrästes Loch (9, 10) auf jeder ihrer Seiten (5, 6) umfasst, gesetzt zu werden, wobei jedes gefräste Loch geeignet ist, ein erstes bzw. ein zweites Verbindungsteil (14, 15) aus zwei Elementen (14a, 14b, 15a, 15b) des Systems aufzunehmen, die durch Festklemmen der Elemente ermöglichen, im Bereich des gefrästen Lochs eine Vorspannung zu bewirken, wobei ein jedes der ersten und zweiten Verbindungsteile (14, 15) mit einer Bohrung versehen ist, wobei das System auch einen Kern zur Verbindung (19) mit dem ersten und dem zweiten Verbindungsteil (14, 15) umfasst, derart, dass der Kern (19) einen ersten Teil (19a) und einen zweiten Teil (19b, 19c) umfasst, wovon der erste Teil (19a) sich an die Oberfläche der Bohrung des ersten Verbindungsteils (14), auf das eine zu der Achse des Lochs im Wesentlichen parallele Kraft ausgeübt wird, anschmiegt, und der zweite Teil (19b, 19c) des Verbindungskerns (19) in die in dem zweiten Verbindungsteil (15) ausgebildete Bohrung eingreift, um dort der Reaktion auf die Kraft standzuhalten.

2. Verbindungssystem nach Anspruch 1, **dadurch gekennzeichnet, dass** die Bohrung des ersten Verbindungsteils (14) konisch ist und sie geeignet ist, den ersten Teil (19a) des Verbindungskerns (19) aufzunehmen.

3. Verbindungssystem nach einem der Ansprüche 1 oder 2, **dadurch gekennzeichnet, dass** die konische Fläche (22) des ersten Teils (19a) des Verbindungskerns (19) einen Kegelöffnungswinkel besitzt, der demjenigen des Kegels der Bohrung des ersten Verbindungsteils (14) im Wesentlichen nahegelegen ist.

4. Verbindungssystem nach einem der vorhergehenden Ansprüche, **dadurch gekennzeichnet, dass** die Bohrung des zweiten Verbindungsteils (15) im Wesentlichen zylindrisch ist und sie geeignet ist, den zweiten Teil des Verbindungskerns (19) aufzunehmen.

5. Verbindungssystem nach einem der vorhergehenden Ansprüche, **dadurch gekennzeichnet, dass** der zweite Teil des Verbindungskerns wenigstens einen ersten und einen zweiten außermittigen Ring (19b, 19c), die ineinander gesteckt sind, umfasst.

6. Verbindungssystem nach Anspruch 5, **dadurch gekennzeichnet, dass** ein jeder der ersten und zweiten Ringe (19b, 19c) geschlitzt ist.

7. Verbindungssystem nach einem der Ansprüche 5 oder 6, **dadurch gekennzeichnet, dass** die innere Bohrung des ersten Rings (19c) konisch ist.

8. Verbindungssystem nach einem der Ansprüche 5 bis 7, **dadurch gekennzeichnet, dass** die äußere Bohrung des ersten Rings (19c) eine Schulter (23) umfasst, die geeignet ist, in einer Bohrung aufgenommen zu werden, wodurch das Halten des Glases (1) im Falle eines Bruchs des Glases (2) ermöglicht wird.

9. Anordnung, umfassend eine erste Glasscheibe (1) und eine zweite Glasscheibe (2), **dadurch gekennzeichnet, dass** die Glasscheiben (1, 2) mittels eines Verbindungssystems nach einem der vorhergehenden Ansprüche verbunden sind.

10. Anordnung nach Anspruch 9, **dadurch gekennzeichnet, dass** zwischen den gegenüberliegenden Seiten der beiden Glasscheiben (1, 2) ein Freiraum vorhanden ist, wobei dieser Raum durch eine Folie aus thermoplastischem Material, die eine verbindende Zwischenschicht zwischen den beiden Glasscheiben (1, 2) bildet, ausgefüllt ist.

## Claims

1. A system for assembly configured to be provided between a sheet of glass (1) comprising a countersunk hole (7, 8) on each of its sides (3, 4) and another sheet of glass (2) also comprising a countersunk hole (9, 10) on each of its sides (5, 6), each countersunk hole being designed respectively to take first and second connecting pieces (14, 15) made of two elements (14a, 14b, 15a, 15b) of the system making it possible, by clamping said elements, to introduce a preload into the countersunk hole, each of the first and second connecting pieces (14, 15) being provided with a bore, the system also comprising a connecting core (19) connecting with the first and second connecting pieces (14, 15), such that the core (19) comprises first (19a) and second parts (19b, 19c) of which the first part (19a) mates with the surface of the bore of the first connecting piece (14) on which it exerts a force roughly parallel to the axis of the hole and of which the second part (19b, 19c) of the connecting core (19) fits into the bore made in the second connecting piece (15) in order therein to react to said force.

2. The assembly system as claimed in claim 1, **characterized in that** the bore of the first connecting piece (14) is conical and is designed to accommodate the first part (19a) of the connecting core (19).

3. The assembly system as claimed in one of claims 1 and 2, **characterized in that** the conical surface (22) of the first part (19a) of the connecting core (19) has a cone angle roughly similar to that of the cone of the bore of the first connecting piece (14).

4. The assembly system as claimed in one of the preceding claims, **characterized in that** the bore of the second connecting piece (15) is roughly cylindrical and is designed to accommodate the second part of the connecting core (19).

5. The assembly system as claimed in one of the preceding claims, **characterized in that** the second part of the connecting core comprises at least a first and a second ring (19b, 19c) which rings are eccentric and nested one inside the other.

6. The assembly system as claimed in claim 5, **characterized in that** each of the first and second rings (19b, 19c) is split.

7. The assembly system as claimed in one of claims 5 or 6, **characterized in that** the inner bore of the first ring (19c) is conical.

8. The assembly system as claimed in one of claims 5 to 7, **characterized in that** the outer bore of the first ring (19c) has a step (23) designed to be housed in a bore thus retaining the glass (1) should the glass (2) break.

9. An assembly comprising a first sheet of glass (1) and a second sheet of glass (2), **characterized in that** the sheets of glass (1, 2) are assembled by means of an assembly system as claimed in any one of the preceding claims.

10. The assembly as claimed in claim 9, **characterized in that** there is a gap between the opposing faces of the two sheets of glass (1, 2), this gap being filled with a sheet of thermoplastic constituting a laminating interlayer between the two sheets of glass (1, 2).
